# FASCICULE DE BREVET EUROPEEN

(11) **EP 0 322 291 B1**
(45) Date de publication et mention de la délivrance du brevet: **10.03.1993**
(21) Numéro de dépôt: 88403214.5
(22) Date de dépôt: 16.12.1988
(51) Int. Cl.: B01J 35/02, B01D 53/36, C01B 17/04

(54) **Procédé de traitement d'effluents gazeux**
Verfahren zur Behandlung von Abgasen
Process for treating gaseous effluents

(30) Priorité: 23.12.1987 FR 8718010
(43) Date de publication de la demande: 28.06.1989
(73) Titulaire: RHONE-POULENC CHIMIE, 92408 Courbevoie Cédex (FR)
(72) Inventeur: Quemere, Eric, F-95240 Cormeilles/en Parisis (FR); Chopin, Thierry, F-93200 Saint Denis (FR); Nortier, Patrice, F-93230 Romainville (FR)
(74) Mandataire: Esson, Jean-Pierre

(56) Documents cités:
- EP-A- 0 218 766
- EP-A- 0 244 301
- FR-A- 2 295 117
- US-A- 4 495 307

## Description

La présente invention concerne un procédé pour le traitement de gaz, notamment des effluents gazeux industriels, contenant des composés soufrés, en vue de la production de soufre élémentaire.

Elle concerne plus particulièrement un procédé de traitement mettant en oeuvre la réaction de Claus et/ou la réaction d'hydrolyse des composés organiques du soufre.

Dans le procédé Claus classique, la récupération du soufre à partir de gaz renfermant de l'hydrogène sulfuré et éventuellement des dérivés organiques du soufre comporte deux étapes.

Dans une première étape, on brûle l'hydrogène sulfuré en présence d'une quantité d'air contrôlée pour transformer une partie de l'hydrogène sulfuré en anhydride sulfureux puis, dans une deuxième étape, on fait passer le mélange gazeux obtenu dans des convertisseurs en série renfermant un lit de catalyseur sur lequel a lieu la réaction de Claus :

2H₂S + SO₂ → 3S + 2H₂O (1)

Par ailleurs, outre l'hydrogène sulfuré, les gaz peuvent contenir des composés organiques du soufre tels que CS₂ et COS qui sont généralement stables au niveau des convertisseurs catalytiques et qui contribuent à accroître de 20 à 50 % les émissions de SO₂ et de composés sulfurés dans l'atmosphère après incinération des fumées. Ces composés très gênants sont soit déjà contenus dans le gaz à traiter, soit formés au cours de la première étape d'oxydation conduite à température élevée.

Ces composés peuvent être éliminés par plusieurs types de réaction en particulier par hydrolyse selon les réactions (2) :

CS₂ + 2H₂O → CO₂ + 2H₂S

CS₂ + H₂O → COS + H₂S

COS + H₂O → CO₂ + H₂S (2)

Ces réactions s'effectuent également sur un lit catalytique, avantageusement avec un catalyseur à base de titane, d'oxyde de cérium ou d'oxyde de zirconium ou d'alumine.

Elles interviennent généralement simultanément à la réaction de Claus (1) dans les convertisseurs.

Les lits de catalyseur sont constitués, jusqu'à présent, de particules de catalyseur sous forme de granulés cylindriques ou sphériques formés par moulage ou extrusion. Toutefois, la quantité de catalyseur qu'il est possible d'introduire dans un convertisseur est limitée par la perte de charge induite par celui-ci, ce qui entraîne des taux de production de soufre élémentaire et de transformation des composés organiques du soufre inférieurs aux taux théoriques calculés par les lois thermodynamiques.

La présente invention a notamment pour but de remédier à cet inconvénient en proposant un procédé de traitement reposant sur l'utilisation d'un catalyseur façonné à forme polylobée permettant d'obtenir pour un coefficient de remplissage des convertisseurs identiques, une perte de charge plus faible.

De plus, l'utilisation de catalyseurs façonnés conformément à l'invention permet d'obtenir des performances catalytiques nettement améliorées tant pour la réaction de Claus que pour les réactions d'hydrolyse des composés organiques du soufre.

Cette amélioration peut s'expliquer par le fait que les réactions (1) de Claus et (2) d'hydrolyse sont limitées par des phénomènes de diffusion de la matière dans les particules de catalyseur.

De ce fait, tous les sites catalytiquement actifs de la particule de catalyseur ne sont pas en contact avec les gaz à traiter, notamment ceux situés au coeur de la particule. Ainsi, l'activité théorique du catalyseur ne peut être obtenue.

Il a certes déja été indiqué dans le document EP-A-0244301 que l'utilisation d'un catalyseur polylobé, pour conduire une réaction de CLAUS et/ou d'hydrolyse de composés organiques du soufre, est possible, mais l'enseignement de cette référence est limité à des catalyseurs à base d'oxyde de zirconium ; en outre, cette référence reste muette sur les problèmes de diffusion susmentionnés, et elle n'indique pas, ou même permettrait de déduire, l'effet technique particulier qui pourrait être apporté par l'utilisation d'une telle forme polylobée.

Il est maintenant proposé, selon l'invention, un procédé de traitement d'un gaz contenant des composés soufrés en vue d'éliminer lesdits composés soufrés par mise en oeuvre de la réaction de CLAUS et/ou d'hydrolyse de composés organiques du soufre, du type comprenant le passage dudit gaz sur un catalyseur comprenant comme composé essentiel un élément catalytiquement actif choisi parmi les oxydes de titane, de cérium et d'aluminium, procédé caractérisé par le fait que l'on utilise un catalyseur ayant une forme polylobée concave, l'oxyde de zirconium n'entrant pas dans la composition dudit catalyseur.

Selon une première variante de l'invention, la section transversale du catalyseur est circonscrite dans un cercle de diamètre compris entre 1,2 mm et 9 mm environ. Les lobes de la section transversale sont, de préférence, identiques en dimensions et/ou en forme.

Selon une seconde variante de l'invention, la section transversale du catalyseur est circonscrite dans un ovale de grand axe compris entre 2 mm et 9 mm environ, et de petit axe compris entre 1,2 mm et 7 mm environ. Au moins un des lobes de la forme polylobée est différent en forme et/ou en dimensions des autres lobes. De préférence, les lobes sont identiques deux à deux, avantageusement les lobes identiques ne sont pas adjacents.

Selon une autre caractéristique de l'invention, commune aux deux variantes définies ci-dessus, les lobes de la forme polylobée sont sécants. Toutefois, dans une variante de réalisation de l'invention, au moins deux lobes adjacents de la forme polylobée ne sont pas sécants.

Selon des modes de réalisation préférées de l'invention, les formes polylobées sont soit des formes trilobées, soit des formes quadrilobées. Dans ce dernier cas, les lobes opposés de la forme quadrilobée sont identiques en forme et en dimensions.

Selon une autre caractéristique de l'invention, le catalyseur présente dans sa section transversale au moins une ouverture ou canal longitudinal débouchant aux deux extrémités du catalyseur, cette ouverture étant de préférence de forme cylindrique.

Dans un mode de réalisation préféré, le catalyseur comporte un canal central et un canal au centre de chaque lobe.

Le catalyseur utilisé selon l'invention comprend comme composant essentiel un élément catalytiquement actif choisi dans le groupe comprenant l'oxyde d'aluminium, l'oxyde de titane, l'oxyde de cérium, ou un mélange de ceux-ci. La proportion pondérale de l'élément catalytiquement actif par rapport au poids total du catalyseur fini peut varier de 0,5 à 100 %, et de préférence de 60 à 99 % environ.

A titre d'exemple, l'oxyde de titane peut être utilisé seul ou en mélange avec plusieurs oxydes tels que l'alumine, la silice, l'oxyde de cérium, l'oxyde d'étain, les oxydes de terres rares trivalents, l'oxyde de molybdène, l'oxyde de cobalt, l'oxyde de nickel, l'oxyde de fer ou analogues. Il en est de même pour l'oxyde de cérium, et l'alumine.

Les oxydes d'éléments catalytiquement actifs décrits ci-dessus convenables pour l'invention sont tous les oxydes de ces éléments catalytiquement actifs quel que soit leur mode de préparation ou leur origine.

Les catalyseurs de l'invention peuvent, en outre, comprendre un ou plusieurs constituants choisis parmi les argiles, silicates, sulfates d'un métal alcalino-terreux, ou d'ammonium, les fibres céramiques, amiante, silice.

Ils peuvent également comprendre des additifs pour faciliter la mise en forme et des additifs pour améliorer leurs propriétés mécaniques finales.

A titre d'exemple d'additifs, on peut citer notamment : la cellulose, la carboxyméthyl-cellulose, la carboxyéthyl-cellulose, du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

On peut citer, par exemple, les catalyseurs décrits dans les brevets européens 60 741, 172 972, français n° 2 224 203, 2 190 517 demandes françaises n° 86 06261 et 86 14888.

Selon un autre mode de réalisation de l'invention, l'élément catalytiquement actif est imprégné sur un support généralement réfractaire.

A titre d'exemple de support convenable, on peut citer l'alumine, la silice, l'oxyde de cérium, l'oxyde de titane.

Le catalyseur de l'invention peut être préparé selon les différentes techniques connues de fabrication des catalyseurs, puis conformé à la forme de l'invention.

Ainsi, à titre d'exemple, le catalyseur peut être obtenu par malaxage des différents constituants du catalyseur et extrusion de la pâte minérale obtenue. On peut obtenir soit un catalyseur dit "massique" contenant l'oxyde de l'élément catalytiquement actif lié ou non à l'un au moins des oxydes tels que l'alumine, la silice, l'oxyde de cérium, l'oxyde d'étain, l'oxyde de titane ou les oxydes de terres rares trivalents, soit un catalyseur dit "imprégné" obtenu par imprégnation par une solution d'un composé d'aluminium, de cérium, d'étain, de titane, de terres rares ou d'autres composés, constitué de l'oxyde de l'élément catalytiquement actif, par exemple l'oxyde de titane, et conformé à une forme selon l'invention.

Ces exemples de fabrication ne sont donnés qu'à titre d'illustration et il est possible, sans pour cela sortir de l'invention, d'utiliser toutes méthodes permettant de conformer une poudre ou une pâte à une forme particulière, telles que par exemple le moulage, le compactage.

D'autres caractéristiques, avantages et buts de l'invention apparaîtront plus clairement au vu des exemples donnés ci-dessous uniquement à titre d'illustration.

### Exemple 1 : (catalyseur A)

On ajoute à une suspension d'oxyde de titane obtenue après hydrolyse et filtration dans le procédé classique d'attaque sulfurique de l'ilménite, une suspension de chaux pour neutraliser la totalité des sulfates. La suspension est séchée à 150°C pendant 1 heure. La poudre obtenue est malaxée en présence d'eau et d'acide nitrique dans les proportions suivantes :

| | |
|---|---|
| - TiO₂ | 54 % |
| - HNO₃ | 6 % |
| - H₂O | 40 % |

La pâte ainsi obtenue est extrudée au travers d'une filière pour obtenir des extrudés ayant une forme trilobée dont le diamètre du cercle circonscrit est de 4 mm et les lobes sécants et identiques ont un diamètre de 1,8 mm.

Après séchage à 120°C et calcination à 450°C, les extrudés ont les caractéristiques suivantes :

| | |
|---|---|
| - diamètre du cercle circonscrit | 4 mm |
| - surface spécifique | 118 m²/g |
| - volume poreux total | 0,34 cm³/g |

### Exemple 2 : (catalyseur B)

Avec la pâte de l'exemple 1, on fabrique des extrudés ayant une forme trilobée dont le diamètre du cercle circonscrit est de 1,5 mm et les lobes sécants et identiques ont un diamètre de 0,8 mm.

Après séchage à 120°C et calcination à 450°C, les extrudés ont les caractéristiques suivantes :

| | |
|---|---|
| - diamètre du cercle circonscrit | 1,5 mm |
| - surface spécifique (BET) | 124 m²/g |
| - volume poreux total | 0,32 cm³/g |

### Exemple 3 : (catalyseur C)

On réalise un extrudé de forme trilobée comme dans les deux exemples précédents. Le diamètre du cercle circonscrit est de 7 mm, le diamètre des lobes sécants est de 3 mm.

Après séchage à 120°C et calcination à 450°C, les extrudés ont les caractéristiques suivantes :

| | |
|---|---|
| - diamètre du cercle circonscrit | 7 mm |
| - surface spécifique (BET) | 120 m²/g |
| - volume poreux total | 0,33 cm³/g |

### Exemple 4 : (catalyseur D)

La pâte de l'exemple 1 est extrudée à travers une filière pour obtenir une forme quadrilobée dont les lobes opposés sont identiques et dont la section transversale est circonscrite dans un ovale de grand axe égal à 4 mm et de petit axe égal à 2 mm. Le diamètre des grands lobes est de 1,8 mm, celui des petits lobes est égal à 1 mm.

Après séchage à 120°C et calcination à 450°C, les extrudés ont les caractéristiques suivantes :

| | |
|---|---|
| - grand axe de l'ovale | 4 mm |
| - petit axe de l'ovale | 2 mm |
| - surface spécifique | 116 m²/g |
| - volume poreux | 0,35 cm³/g |

### Exemple comparatif : (catalyseur E)

On réalise une pâte comme dans l'exemple 1. Cette pâte est ensuite extrudée à travers une filière cylindrique de diamètre 4 mm. Les extrudés obtenus sont séchés à 120°C, puis calcinés à 450°C.

Le catalyseur E a les caractéristiques suivantes :

| | |
|---|---|
| - diamètre | 4 mm |
| - surface spécifique | 120 m²/g |
| - volume poreux total | 0,35 cm³/g |

### Test catalytique I

Ce test catalytique a pour but de comparer les activités des catalyseurs en hydrolyse des composés organiques du soufre et plus particulièrement de COS et CS₂.

On introduit dans un réacteur un gaz ayant la composition suivante, en volume :

| | |
|---|---|
| H₂S | 6 % |
| SO₂ | 4 % |
| CS₂ | 1 % |
| H₂O | 30 % |
| N₂ | 59 % |

En fonctionnement isotherme, à une température de 330°C, et pour un volume identique de réacteur rempli de catalyseur, la vitesse volumique des gaz est égale à 2 400 h⁻¹ calculée dans les conditions normales de température et de pression. Le temps de contact des gaz est de 1,5 seconde.

On compare les catalyseurs en mesurant l'activité d'hydrolyse en analysant par chromatographie en phase gazeuse les gaz à la sortie du réacteur, pour déterminer le pourcentage de conversion des composés organiques du soufre.

Les résultats obtenus sont rassemblés dans le tableau I ci-dessous :

| Catalyseur | % CS₂, COS |
|---|---|
| A | 94 % |
| B | 99 % |
| C | 86 % |
| D | 92 % |
| E | 84 % |

Ces résultats montrent clairement la supériorité des catalyseurs polylobés.

### Test catalytique II :

Ce test catalytique a pour but de comparer les activités des catalyseurs pour la réaction (1) de Claus.

On introduit dans un réacteur ou convertisseur un gaz de composition, en volume :

| | |
|---|---|
| H₂S | 6 % |
| SO₂ | 3 % |
| H₂O | 30 % |
| N₂ | 61 % |

En fonctionnement isotherme à une température de 330°C et pour un volume identique de réacteur rempli de catalyseur, la vitesse volumique des gaz est égale à 1.2000 h⁻¹ calculée dans les conditions normales de température et de pression. Le temps de contact des gaz est de 0,3 seconde.

L'activité des catalyseurs est mesurée par analyse par chromatographie en phase gazeuse des gaz à l'entrée et à la sortie du réacteur et détermination du pourcentage d'hydrogène sulfureux transformé.

Les résultats obtenus sont rassemblés dans le tableau II ci-dessous :

| Catalyseur | % H₂S transformé |
|---|---|
| A | 65 |
| B | 68 |
| C | 62 |
| D | 64 |
| E | 60 |

Comme pour le test catalytique I, ces résultats montrent la supériorité des catalyseurs polylobés. L'écart entre les différents taux de transformation pour la réaction de Claus est peu élevé, car même les taux de transformation obtenus sont proches du taux maximum de transformation déterminée par les lois de la thermodynamique, pour les conditions de concentration, vitesse et temps de contact des gaz de l'exemple.

## Revendications

1. Procédé de traitement d'un gaz contenant des composés soufrés en vue d'éliminer lesdits composés soufrés par mise en oeuvre de la réaction de CLAUS et/ou d'hydrolyse de composés organiques du soufre, du type comprenant le passage dudit gaz sur un catalyseur comprenant comme composé essentiel un élément catalytiquement actif choisi parmi les oxydes de titane, de cérium et d'aluminium et leurs mélanges, procédé caractérisé par le fait que l'on utilise un catalyseur ayant une forme polylobée concave, l'oxyde de zirconium n'entrant pas dans la composition dudit catalyseur.

2. Procédé de traitement d'un gaz contenant des composés soufrés en vue d'éliminer lesdits composés soufrés par mise en oeuvre de la réaction de CLAUS et/ou d'hydrolyse de composés organiques du soufre, du type comprenant le passage dudit gaz sur un catalyseur comprenant comme composé essentiel un élément catalytiquement actif choisi parmi les oxydes de titane, de cérium et d'aluminium et leurs mélanges, procédé caractérisé par le fait que l'on utilise un catalyseur ayant une forme polylobée concave et que la section transversale dudit catalyseur est circonscrite dans un cercle de diamètre compris entre 1,2 mm et 9 mm.

3. Procédé de traitement d'un gaz contenant des composés soufrés en vue d'éliminer lesdits composés soufrés par mise en oeuvre de la réaction de CLAUS et/ou d'hydrolyse de composés organiques du soufre, du type comprenant le passage dudit gaz sur un catalyseur comprenant comme composé essentiel un élément catalytiquement actif choisi parmi les oxydes de titane, de cérium et d'aluminium et leurs mélanges, procédé caractérisé par le fait que l'on utilise un catalyseur ayant une forme polylobée concave et que la section transversale dudit catalyseur est circonscrite dans un ovale de grand axe compris entre 2 mm et 9 mm et de petit axe compris entre 1,2 mm et 7 mm.

4. Procédé selon l'une des revendications 1 ou 2, caractérisé en ce que les lobes de la forme polylobée sont identiques en dimensions et/ou en forme.

5. Procédé selon l'une des revendications 1 à 3, caractérisé en ce qu'au moins un des lobes de la forme polylobée est différent en forme et/ou en dimensions des autres lobes.

6. Procédé selon l'une des revendications 1 à 5, caractérisé en ce qu'au moins deux lobes adjacents de la forme polylobée sont sécants.

7. Procédé selon l'une des revendications précédentes, caractérisé en ce que la forme polylobée comporte trois lobes.

8. Procédé selon l'une des revendications 1 à 6, caractérisé en ce que la forme polylobée comporte quatre lobes.

9. Procédé selon la revendication 8, caractérisé en ce que les lobes opposés de la forme quadrilobée précitée sont identiques en forme et en dimensions.

10. Procédé selon l'une des revendications précédentes, caractérisé en ce que ledit catalyseur comprend au moins un canal longitudinal débouchant aux deux extrémités du catalyseur.

11. Procédé selon la revendication 10, caractérisé en ce que ledit catalyseur comprend un canal central et un canal au centre de chaque lobe.

12. Procédé selon l'une des revendications 1 à 11, caractérisé en ce que ledit catalyseur contient de 0,5 à 100 % en poids d'élément catalytiquement actif (exprimé en oxyde), de préférence de 60 à 99 %.

13. Procédé selon l'une des revendications 1 à 12, caractérisé en ce que ledit catalyseur comprend un sulfate d'alcalino-terreux ou un sulfate d'ammonium.

14. Procédé selon l'une des revendications 1 à 13, caractérisé en ce que ledit catalyseur comprend au moins un composé choisi dans le groupe suivant : alumine, silice, argile, amiante, fibres céramiques.

15. Procédé selon l'une des revendications 1 à 14, caractérisé en ce que ledit catalyseur comprend au moins un oxyde d'un métal choisi dans le groupe comprenant le cérium, le molybdène, le cobalt, le silicium, les terres-rares trivalentes, le nickel, le fer, l'étain et l'aluminium, le titane.

16. Procédé selon l'une des revendications 1 à 15, caractérisé en ce que l'élément catalytiquement actif est imprégné sur un support choisi dans le groupe comprenant l'alumine, la silice, l'oxyde de cérium, l'oxyde de titane.

## Claims

1. Process for treating a gas containing sulphur-containing compounds with a view to removing the said sulphur-containing compounds by implementing the Claus reaction and/or the reaction of hydrolysis of organic sulphur compounds, of the type comprising passing the said gas over a catalyst comprising as essential compound a catalytically active component chosen from the oxides of titanium, cerium and aluminium and their mixtures, which process is characterised in that a catalyst having a concave multilobed shape is used, zirconium oxide not being part of the composition of the said catalyst.

2. Process for treating a gas containing sulphur-containing compounds with a view to removing the said sulphur-containing compounds by implementing the Claus reaction and/or the reaction of hydrolysis of organic sulphur compounds, of the type comprising passing the said gas over a catalyst comprising as essential compound a catalytically active component chosen from the oxides of titanium, cerium and aluminium and their mixtures, which process is characterised in that a catalyst having a concave multilobed shape is used and that the cross section of the said catalyst is circumscribed in a circle of diameter between 1.2 mm and 9 mm.

3. Process for treating a gas containing sulphur-containing compounds with a view to removing the said sulphur-containing compounds by implementing the Claus reaction and/or the reaction of hydrolysis of organic sulphur compounds, of the type comprising passing the said gas over a catalyst comprising as essential compound a catalytically active component chosen from the oxides of titanium, cerium and aluminium and their mixtures, which process is characterised in that a catalyst having a concave multilobed shape is used and that the cross section of the said catalyst is circumscribed in an oval of major axis between 2 mm and 9 mm and of minor axis between 1.2 mm and 7 mm.

4. Process according to either of Claims 1 and 2, characterised in that the lobes of the multilobed shape are identical in dimensions and/or in shape.

5. Process according to one of Claims 1 to 3, characterised in that at least one of the lobes of the multilobed shape is different in shape and/or in dimensions from the other lobes.

6. Process according to one of Claims 1 to 5, characterised in that at least two adjacent lobes of the multilobed shape are secant.

7. Process according to one of the preceding claims, characterised in that the multilobed shape comprises three lobes.

8. Process according to one of Claims 1 to 6, characterised in that the multilobed shape comprises four lobes.

9. Process according to Claim 8, characterised in that the opposite lobes of the aforementioned four-lobed shape are identical in shape and in dimensions.

10. Process according to one of the preceding claims, characterised in that the said catalyst comprises at least one longitudinal channel opening out at the two ends of the catalyst.

11. Process according to Claim 10, characterised in that the said catalyst comprises a central channel and a channel at the centre of each lobe.

12. Process according to one of Claims 1 to 11, characterised in that the said catalyst contains from 0.5 to 100 % by weight of catalytically active component (expressed as oxide), preferably from 60 to 99 %.

13. Process according to one of Claims 1 to 12, characterised in that the said catalyst comprises an alkaline-earth metal sulphate or an ammonium sulphate.

14. Process according to one of Claims 1 to 13, characterised in that the said catalyst comprises at least one compound chosen from the following group: alumina, silica, clay, asbestos and ceramic fibres.

15. Process according to one of Claims 1 to 14, characterised in that the said catalyst comprises at least one oxide of a metal chosen from the group comprising cerium, molybdenum, cobalt, silicon, the trivalent rare earths, nickel, iron, tin and aluminium, and titanium.

16. Process according to one of Claims 1 to 15, characterised in that the catalytically active element is impregnated onto a support chosen from the group comprising alumina, silica, cerium oxide and titanium oxide.

## Patentansprüche

1. Verfahren zur Behandlung eines Gases, das Schwefelverbindungen enthält, im Hinblick auf Eliminierung der besagten Schwefelverbindungen, durch Anwendung der CLAUS-Reaktion und/oder Hydrolyse organischer Schwefelverbindungen, von der Art, die das Vorbeiziehen des besagten Gases über einen Katalysator beinhaltet, der als wesentlichen Bestandteil ein katalytisch aktives Element enthält, das unter den Oxiden von Titan, Cer und Aluminium und deren Mischungen ausgewählt wird, durch die Tatsache gekennzeichnet, daß man einen Katalysator verwendet, der eine konkave, polylobuläre Form hat, wobei Zirkoniumoxid nicht in die Zusammensetzung des besagten Katalysators eingeht.

2. Verfahren zur Behandlung eines Gases, das Schwefelverbindungen enthält, im Hinblick auf Eliminierung der besagten Schwefelverbindungen durch Anwendung der CLAUS-Reaktion und/oder Hydrolyse organischer Schwefelverbindungen, von der Art, die das Vorbeiziehen des besagten Gases über einen Katalysator beinhaltet, der als wesentlichen Bestandteil ein katalytisch aktives Element enthält, das unter den Oxiden von Titan, Cer und Aluminium und deren Mischungen ausgewählt wird, durch die Tatsache gekennzeichnet, daß man einen Katalysator verwendet, der eine konkave, polylobuläre Form hat und daß der Querschnitt des besagten Katalysators einem Kreis mit Durchmesser zwischen 1,2 mm und 9 mm einbeschrieben ist.

3. Verfahren zur Behandlung eines Gases, das Schwefelverbindungen enthält, im Hinblick auf Eliminierung der besagten Schwefelverbindungen durch Anwendung der CLAUS-Reaktion und/oder Hydrolyse organischer Schwefelverbindungen, von der Art, die das Vorbeiziehen des besagten Gases über einen Katalysator beinhaltet, der als wesentlichen Bestandteil ein katalytisch aktives Element enthält, das unter den Oxiden von Titan, Cer und Aluminium und deren Mischungen ausgewählt wird, durch die Tatsache gekennzeichnet, daß man einen Katalysator verwendet, der eine konkave, polylobuläre Form hat und daß der Querschnitt des besagten Katalysators einem Oval mit großer Halbachse, die zwischen 2 mm und 9 mm liegt und mit kleiner Halbachse, die zwischen 1,2 mm und 7 mm liegt, einbeschrieben ist.

4. Verfahren nach einem der Ansprüche 1 oder 2, gekennzeichnet dadurch, daß die Lappen der polylobulären Form identisch in den Dimensionen und/oder der Form sind.

5. Verfahren nach einem der Ansprüche 1 bis 3, dadurch gekennzeichnet, daß sich mindestens einer der Lappen der polylobulären Form in der Gestalt und/oder den Dimensionen von den anderen Lappen. unterscheiden.

6. Verfahren nach einem der Ansprüche 1 bis 5, dadurch gekennzeichnet, daß mindestens zwei angrenzende Lappen der polylobulärer Form sich schneiden.

7. Verfahren nach einem der vorausgegangenen Ansprüche, dadurch gekennzeichnet, daß die polylobuläre Form aus drei Lappen besteht.

8. Verfahren nach einem der Ansprüche 1 bis 6, dadurch gekennzeichnet, daß die polylobuläre Form aus vier Lappen besteht.

9. Verfahren nach Anspruch 8, dadurch gekennzeichnet, daß die entgegengesetzten Lappen der vorerwähnten quadrilobulären Form identisch sind in der Gestalt und in den Dimensionen.

10. Verfahren nach einem der vorangegangenen Ansprüche, dadurch gekennzeichnet, daß besagter Katalysator mindestens einen Längskanal aufweist, der an beiden Katalysatorenden zum Vorschein kommt.

11. Verfahren nach Anspruch 10, dadurch gekennzeichnet, daß der besagte Katalysator einen zentralen Kanal und einen Kanal im Zentrum jedes Lappens aufweist.

12. Verfahren nach einem der Ansprüche 1 bis 11, dadurch gekennzeichnet, daß der besagte Katalysator 0,5 bis 100 Gewichtsprozent des katalytisch aktiven Elements enthält (bezogen auf Oxid), bevorzugt 60 bis 99 %.

13. Verfahren nach einem der Ansprüche 1 bis 12, dadurch gekennzeichnet, daß der besagte Katalysator ein Erdalkalisulfat oder Ammoniumsulfat enthält.

14. Verfahren nach einem der Ansprüche 1 bis 13, dadurch gekennzeichnet, daß der besagte Katalysator mindestens eine Verbindung enthält, die aus folgender Gruppe ausgewählt ist: Tonerde, Kieselerde, Ton, Asbest und Keramikfasern.

15. Verfahren nach einem der Ansprüche 1 bis 14, dadurch gekennzeichnet, daß der besagte Katalysator mindestens ein Oxid eines Metalls enthält, das aus der Gruppe ausgewählt wird, die Cer, Molybdän, Kobalt, Silizium, dreiwertige seltene Erden, Nickel, Eisen, Zinn, Aluminium und Titan beinhaltet.

16. Verfahren nach einem der Ansprüche 1 bis 15, dadurch gekennzeichnet, daß das katalytisch aktive Element auf einem Träger imprägniert ist, der aus der Gruppe ausgewählt wird, die Tonerde, Kieselerde, Ceroxid und Titanoxid enthält.
